# EUROPÄISCHE PATENTSCHRIFT

(11) **EP 2 707 230 B1**
(45) Veröffentlichungstag und Bekanntmachung des Hinweises auf die Patenterteilung: **08.07.2015**
(21) Anmeldenummer: 12719697.0
(22) Anmeldetag: 07.05.2012
(51) Int. Cl.: B60B 17/00, C25D 11/36, F16D 65/12

(54) **SCHIENENRAD UND VERFAHREN ZUR HERSTELLUNG EINES SCHIENENRADES**
RAIL WHEEL AND METHOD FOR PRODUCING A RAIL WHEEL
ROUE FERROVIAIRE ET PROCÉDÉ DE FABRICATION D'UNE ROUE FERROVIAIRE

(30) Priorität: 09.05.2011 DE 102011100974
(43) Veröffentlichungstag der Anmeldung: 19.03.2014
(73) Patentinhaber: KNORR-BREMSE Systeme für Schienenfahrzeuge GmbH, 80809 München (DE)
(72) Erfinder: NIESSNER, Matthias, 85737 Ismaning (DE); SIEGL, Christoph, 82061 Neuried (DE)
(86) Internationale Anmeldenummer: PCT/EP2012/058324
(87) Internationale Veröffentlichungsnummer: WO 2012/152732

(56) Entgegenhaltungen:
- WO-A1-97/33100
- WO-A1-2009/086900
- WO-A2-2005/038095
- DE-A1- 2 306 163
- US-A1- 2003 089 564

## Beschreibung

Die Erfindung betrifft ein Schienenrad nach dem Oberbegriff des Anspruchs 1 und ein Verfahren zur Herstellung eines Schienenrades nach dem Oberbegriff des Anspruchs 11.

Eine Verbindung von Reibscheiben zum Abbremsen eines Schienenfahrzeugs mit einem Schienenrad wird durch eine Verschraubung der Reibscheiben auf einem Radsteg ermöglicht. Diese Verbindung muß so ausgeführt sein, dass sich die Reibscheiben bei Erwärmung ausdehnen und beim Abkühlen wieder zusammenziehen können. Dieses temperaturbedingte Ausdehnen und Zusammenziehen verursacht Gleitbewegungen der Reibscheiben auf dem Radsteg. Diese Gleitbewegungen finden aufgrund der Vorspannkraft der Schrauben unter relativ hohem Druck statt.

Reibscheiben werden typischerweise metallisch blank ohne dauerhafte Beschichtung ausgeliefert. Die Scheiben können dabei mit einem Öl überzogen sein, welches über einen zeitlich begrenzten Raum den Reibscheiben einen Korrosionsschutz bietet. Gerade bei längerer Lagerung, insbesondere Freilagerung, kann es zur Korrosion u.a. der Kontaktflächen der Reibscheibe kommen.

Von einigen Herstellern wurde beispielsweise eine Grundierung des Radstegs vorgesehen oder auch das Aufbringen einer Montagegleitpaste, welche aufgrund der Gleitbewegungen allerdings nach und nach wieder aus dem Kontaktbereich zwischen dem Radsteg und den Reibscheiben ausgetragen wurde und die daher über längere Zeit nicht die Minderung der Reibung zwischen dem Radsteg und den Reibscheiben gewährleisten können.

Sofern die Reibung zunimmt, kann es allerdings zunehmend zu Reibkorrosion und adhesivem Verschleiß, auch als "Fressen" bekannt, kommen. Durch diesen adhesiven Verschleiß wird das Ausdehnen und Zusammenziehen der Bremsscheibe beim Bremsen erschwert und die Schraubenvorspannung reduziert. Dies führt wiederum zu einer höheren Belastung und verkürzt die Lebensdauer der Verschraubung.

Bei der Umsetzung eines wohldefinierten dauerhaften Kontaktes zwischen Bremsscheibe und Radsteg ergibt sich bei Verwendung eines an sich bekannten Gleitlackes das Problem, dass eine Verbindung einer Gleitlackschicht mit der metallischen Oberfläche eines Schienenrades bzw. der Kontaktfläche des Radsteges keine ausreichende Haltbarkeit aufwies. Der Gleitlack löste sich nach einer geringen Anzahl von Bremsungen von der metallischen Oberfläche ab. Es kam zu einer Reibung Metall auf Metall und den damit verbundenen Problemen des adhesivem Verschleisses und der Reibkorrosion.

Es ist daher Aufgabe der vorliegenden Erfindung den Effekt des Auftretens von adhesivem Verschleiß bei einem Schienenrad mit Reibscheiben über einen längeren Zeitraum zu verringern.

Diese Aufgabe wird durch ein Schienenrad mit den Merkmalen des Anspruchs 1 und durch ein Verfahren mit den Merkmalen des Anspruchs 11 gelöst.

Erfindungsgemäß weist ein Schienenrad mit Radbremsscheibe einen Radkörper und beidseitig daran mit Befestigungselementen angebrachten Reibscheiben auf, wobei zumindest zwischen den jeweiligen Kontaktflächen der Reibscheiben und den Kontaktflächen des Radkörpers eine mehrlagige Beschichtung angeordnet ist.

Die Beschichtung ist mehrlagig aufgebaut, um Synergieeffekte einzelner Materiallagen auszunutzen, welche beispielsweise die Temperaturbeständigkeit oder die Härte der Beschichtung insgesamt erhöhen. Die mehrlagige Beschichtung ermöglicht eine Verringerung eines Eindrückens der Reibscheibe in den Radkörper und eine Verringerung eines Vorkraftspannverlustes der Befestigungselemente.

Grundsätzlich sind der Aufbau und die Herstellung eines Schienenrades beispielsweise aus der WO 2009/086900 A1 bekannt. Hier wird der adhesive Verschleiß durch eine Zwischenschicht aus einem metallischen Blech, das zwischen der Reibscheibe bzw. Radbremsscheibe und dem Radsteg angeordnet ist, verringert.

Durch die Anordnung einer mehrlagigen Beschichtung zumindest im jeweiligen Kontaktbereich zwischen den Reibscheiben und dem Radkörper wird, alternativ zu einer Zwischenschicht aus einem metallischen Blech, eine Verringerung von Fresserscheinungen und Radschäden ermöglicht. Diese erste Materiallage kann in materialsparender Art und Weise direkt auf die jeweilige Kontaktfläche der Reibscheiben aufgebracht sein. Alternativ kann auch die gesamte Reibscheibe beschichtet sein.

Die mehrlagige Anordnung der Beschichtung kann besonders vorteilhaft bereits vor der Montage auf der Reibscheibe vorliegen oder sich erst im Zusammenspiel der Kontaktflächen der Reibscheibe und des Radkörpers ergeben. So ist es beispielsweise auch denkbar, dass die Kontaktfläche der Reibscheibe eine erste mechanisch und thermisch hochbelastbare Materiallage aufweist und die Kontaktfläche des Radkörpers eine schmierstoffhaltige Materiallage, welche gemeinsam nach der Montage des Schienenrades eine mehrlagige Beschichtung ergeben.

Vorteilhafte Ausführungsbeispiele der Erfindung sind Gegenstand der Unteransprüche.

Es hat sich gezeigt, dass insbesondere phosphathaltige Materiallagen eine große Abriebfestigkeit aufweisen und zugleich einen sehr festen Verbund mit dem metallischen Untergrund der Reibscheibe bilden, so dass ein Ablösen dieser Materiallage, anders als bei Gleitbeschichtungen, nach mehreren Bremsungen nicht zu beobachten ist.

Auf die phosphathaltige Materiallage kann vorteilhaft eine schmierstoffhaltige Materiallage aufgebracht werden. Dabei eignet sich die phosphathaltige Materiallage als Trägermaterial und ermöglicht ein festes Anhaften der zweiten Materiallage, wie beispielsweise ein aushärtender Gleitlack oder eine Trockenschmierstoffbeschichtung.

Erfindungsgemäß weist ein Verfahren zum Herstellen eines Schienenrades mit einer oder mehreren Reibscheiben folgende Schritte auf:
A) Bereitstellen einer Reibscheibe mit einer Kontaktfläche zum Anlegen an eine Kontaktfläche eines Radkörpers,
B) Phosphatieren zumindest der Kontaktfläche der Reibscheibe unter Ausbildung einer phosphathaltigen Materiallage;
C) Aufbringen einer schmierstoffhaltigen Materiallage auf die phosphathaltige Materiallage und
D) Montage des Schienenrades.

Das Bereitstellen der Reibscheibe kann üblicherweise durch Guss oder Schmieden eines Formteils und eine anschließende mechanische Bearbeitung erfolgen.

Anschließend erfolgt das Phosphatieren, also das Aufbringen einer phosphathaltigen Materiallage auf die Kontaktfläche der Reibscheibe. Dadurch bildet sich eine mechanisch belastbare und zugleich thermisch stabile Materialschicht auf der Kontaktfläche aus. Diese wirkt einerseits als Trägermaterial für eine schmierstoffhaltige Schicht und verhindert deren Ablösen während des Bremsvorgangs. Diese Synergieeffekte ermöglichen gleichbleibende und dauerhafte Gleitbewegungen der Kontaktflächen des Reibscheibe und des Radkörpers ohne dass es zu Fresserscheinungen kommt.

Um eine möglichst gleichbleibende Qualität der Reibscheiben und deren Beschichtungen zu erreichen, hat sich die Anwendung von genormten Verfahren für das Phosphatieren der Kontaktflächen der Reibscheiben als sinnvoll erwiesen. Hierbei bietet sich die Variante T1 der DIN EN 12476 an.

Dabei reicht es aus, wenn die Reibscheibe beschichtet ist und auf einen metallischen, unbeschichteten Radsteg eines Radkörpers festgelegt wird. Da das Beschichten des Radsteges aufgrund der schlechteren Zugänglichkeit der Kontaktflächen deutlich arbeitsaufwendiger ist, würde durch eine zusätzliche Beschichtung der Kontaktflächen des Radsteges ein weiterer Kostenfaktor bei der Herstellung des Schienenrades entstehen. Es hat sich allerdings herausgestellt, dass bereits das Beschichten der Kontaktfläche einer Reibscheibe eine ausreichende und dauerhafte Verringerung der Reibung gewährleistet, um ein Festfressen zu verhindern.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen näher beschrieben.

Es zeigen:
- Figur 1: einen Teilschnitt eines erfindungsgemäßen Schienenrades,
- Figur 2: einen Teilschnitt des Schienenrades aus Fig. 1 bei der Montage, und
- Figur 3: eine Teildraufsicht einer montierten Reibscheibe.

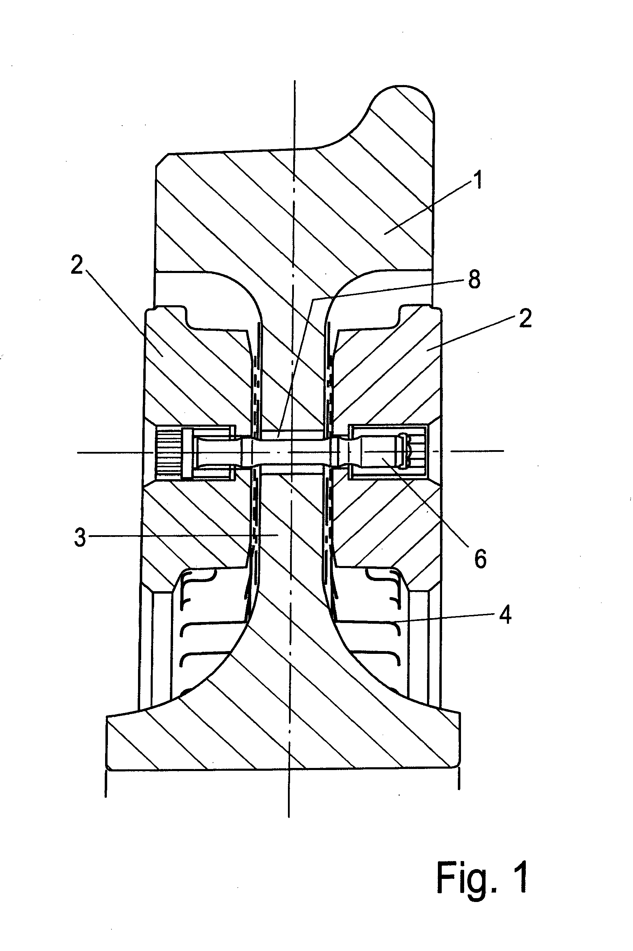

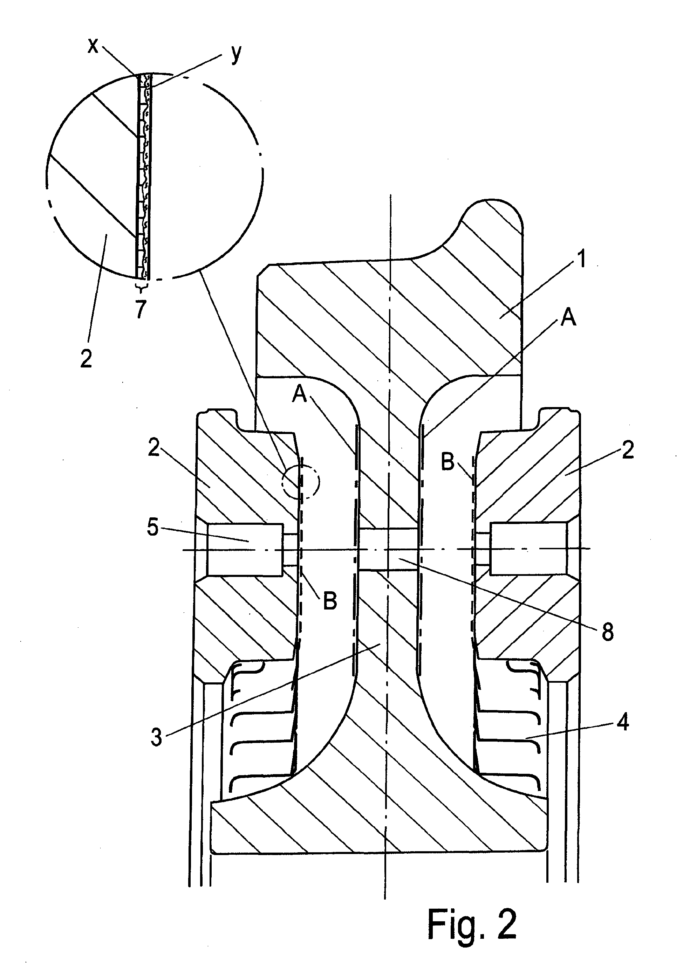

In den Figuren 1 und 2 sind an einen Radkörper 1 Reibscheiben 2 angebracht bzw. montiert.

Dabei weist ein Radsteg 3 des Radkörpers 1, der zwei umfängliche, radial sich erstreckende Kontaktflächen A bildet, eine Bohrung 8 auf, durch die eine Schraube 6 geführt ist, mit der die Reibscheiben 2 mit dem Radkörper 1 verbunden sind.

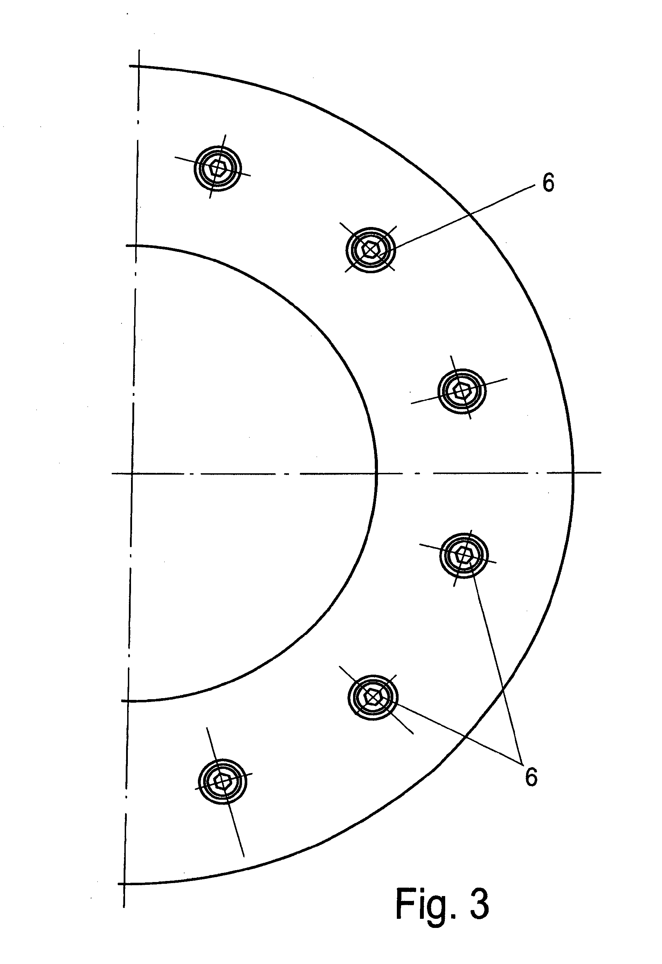

Jede Schraube 6, von denen, wie in Fig. 3 dargestellt, mehrere, in gleichem Winkelabstand auf einem Umfangskreis verteilt sind, ist durch ein Befestigungsauge 5 der jeweiligen Reibscheibe 2 geführt, das stirnseitig ebenso einen Anlagebereich gegenüber dem Radsteg 3 bildet, wie Kühlrippen 4 der Reibscheibe.

Zwischen den Anlagebereichen des Befestigungsauges 5 und den Kühlrippen 4 und dem Radsteg 3 ist jeder Reibscheibe 2 zugeordnet eine Beschichtung 7 angeordnet, an der einerseits die Kontaktfläche A des Radsteges 3 und andererseits eine Kontaktfläche B der Reibscheibe 2 anliegen.

Die Beschichtung 7 wird auf die Kontaktfläche B der Reibscheibe 2 aufgebracht. Die Kontaktfläche A des Radstegs 3 kann unbeschichtet bleiben oder optional ebenfalls eine Beschichtung aufweisen. Diese optionale Beschichtung der Kontaktfläche A kann beispielsweise auch analog zur Beschichtung 7 der Kontaktfläche B oder als Schmierstoffschicht ausgebildet sein.

Die Beschichtung 7 kann zudem über den gesamten Umfangkreis der Reibscheibe 2 auf der Kontaktfläche B verteilt werden oder materialsparend lediglich abschnittsweise. Ersteres in von Vorteil für eine möglichst gleichmäßige Wärmeverteilung im Bereich der Kontaktflächen A und B über den gesamten Umfangskreis.

Dabei weist die beschriebene Beschichtung 7 zumindest eine phosphathaltige Materiallage X auf. Bevorzugt besteht die Beschichtung der Materiallage X aus einem oder mehreren kristallinen Metallphosphaten, vorzugsweise aus Mangan-, Zink- oder Eisenphosphat. Die mehrlagige Beschichtung 7 weist vorzugsweise eine größere Abriebfestigkeit als die unbeschichtete Kontaktpaarung der Reibscheibe 2 mit dem Radsteg 3 auf.

Das Schichtgewicht der phosphathaltigen Materiallage X der Beschichtung 7 der Reibscheibe 2 beträgt für die Anwendung auf einem Schienenrad vorzugsweise mindestens 4 g/m² bis höchstens 100 g/m². Beschichtungen mit kleineren Schichtgewichten können oftmals der mechanischen Beanspruchung nicht standhalten während größere Schichtgewichte sich beim Setzen der Schraubverbindungen aufgrund ihres hohen Betrages als nachteilig erwiesen haben.

Die Schichtdicke der phosphathaltigen Materiallage X der Beschichtung 7 der Reibscheibe 2 beträgt vorzugsweise zwischen 5-20 µm. Bei deutlichem Überschreiten dieses Wertes der Schichtdicke können im Einzelfall Setzerscheinungen auftreten und ein Lösen der Schrauben erfolgen.

Wie die Vergrößerung in Fig. 2 zeigt, ist auf die Materiallage X der beschriebenen Beschichtung 7 zusätzlich eine weitere Materiallage Y aufgebracht. Diese Materiallage besteht aus einem Schmierstoff, vorzugsweise einem Trockenschmierstoff oder weist zumindest Schmierstoffpartikel auf. Zu den Trockenschmierstoffen bzw. Festschmierstoffen zählen u.a. Molybdändisulfid, Graphit, PTFE oder auch alpha-Bornitrid. Dabei sollte der Schmierstoff im vorliegenden Fall eine Temperaturbeständigkeit von vorzugsweise zumindest 300°C aufweisen. Dabei hat sich Molybdändisulfid als besonders geeignet für die Anwendung auf einem Schienenrad erwiesen.

Durch die Beschichtung 7 kann ein Reibwert zwischen den Kontaktflächen A und B auf einen Wert zwischen 0,06 bis 0,2 stabil ermöglicht werden. Die Kontaktflächen sind wieder voneinander lösbar.

Nachfolgend wird anhand der Fig.1-3 ein erfindungsgemäßes Verfahren zur Herstellung einer Reibscheibe 2 für ein Schienenrad nähe beschrieben.

In einem ersten Schritt erfolgt ein Bereitstellen einer unbeschichteten Reibscheibe. Dieses Bereitstellen kann üblicherweise den Guss bzw. das Schmieden eines Formteils und ggf. eine anschließende mechanische Bearbeitung des Formteils umfassen.

In einem zweiten Schritt wird die Reibscheibe 2 nach der mechanischen Bearbeitung zumindest auf der Kontaktfläche B, wie sie in Fig. 1 und 2 abgebildet ist, zum Radsteg 3 hin mit einer Beschichtung 7 versehen. Diese Beschichtung weist zumindest eine phosphathaltige Materiallage auf. Daher wird das Aufbringen der Beschichtung 7 im Weiteren als Phosphatieren bezeichnet. Die Beschichtung ist vorzugsweise nach der Variante T4 der DIN EN 12476 auf die Kontaktfläche B aufzubringen.

Alternativ kann die Reibscheibe 2 auch allseitig, inklusive den Kontaktflächen B phosphatiert werden. Nach der Phosphatierung liegt die phosphathaltige Materiallage X vorzugsweise kristallin auf der Kontaktfläche B der Reibscheibe 2 vor und ist ein optimaler Träger für weitere Materiallagen, wie z.B. eine Trockenschmierstofflage. Selbst bei längerem Betrieb einer solchen Bremsscheibe befindet sich immer noch Schmierstoff zwischen den Kontaktflächen der Reibscheibe und dem Radsteg. Damit wird dauerhaft ein guter Kontaktzustand erreicht.

Bei Bedarf kann nach dem Phosphatieren ein Schmierstoff bzw. ein Gleitmittel aufgetragen werden, welches die Reibwerte der Reibscheibe 2 auf dem Radsteg 3 des Radkörpers 1 weiter verringert.

Die so hergestellte Reibscheibe kann auf einen metallischen unbeschichteten Radsteg festgelegt werden, vorzugsweise verschraubt, werden. Dabei kann ein zusätzlicher Beschichtungsprozess der schwerer zugänglichen Kontaktflächen A des Radsteges 3 vorteilhaft entfallen.

Alternativ kann beispielsweise auch auf dem Radsteg 3 eine Materiallage mit einem Schmierstofflage aufgebracht werden, welche in Zusammenspiel mit der phosphathaltigen Materiallage X eine mehrlagige Beschichtung 7 ausbildet, sobald das Schienenrad im montierten Zustand vorliegt und die Kontaktflächen A mit der Schmierstofflage und B mit der phosphathaltigen Materiallage X aneinander anliegen.

Durch die mehrlagige Beschichtung wird auch ein wirksamer Korrosionsschutz der Kontaktflächen der Reibscheibe ermöglicht.

Nach der Beschichtung und Montage der Reibscheibe 2 kann die Radpfanne mit einem Korrosionsschutzmittel zur Konservierung des Radstegs 3 geflutet werden.

### Bezugszeichenliste

- 1: Radkörper
- 2: Reibscheibe
- 3: Radsteg
- 4: Kühlrippe
- 5: Befestigungsauge
- 6: Schraube
- 7: Beschichtung
- 8: Bohrloch

## Patentansprüche

1. Schienenrad mit einem Radkörper (1) und beidseitig daran mit Befestigungselementen angebrachten Reibscheiben (2), wobei zumindest zwischen einer jeweiligen Kontaktfläche (B) der Reibscheiben (2) und einer Kontaktfläche (A) des Radkörpers (1) eine mehrlagige Beschichtung (7) angeordnet ist, wobei eine erste Materiallage (X) eine phosphathaltige Materiallage (X) ist, die auf der Kontaktfläche (B) der Reibscheibe (2) aufgebracht ist, **dadurch gekennzeichnet, dass** die Beschichtung (7) auf einer der Kontaktfläche (A) zugewandten Oberfläche der phosphathaltigen Materiallage (X) eine schmierstoffhaltige Materiallage (Y) aufweist.

2. Schienenrad nach einem der vorhergehenden Ansprüche, **dadurch gekennzeichnet, dass** die Temperaturbeständigkeit der Beschichtung (7) zumindest 300°C beträgt.

3. Schienenrad nach einem der vorhergehenden Ansprüche, **dadurch gekennzeichnet, dass** der Reibwert der Reibung der Kontaktflächen (A und B) der Reibscheibe (2) und des Radkörpers (1) zumindest 0,06 und maximal 0,2 beträgt.

4. Schienenrad nach einem der vorhergehenden Ansprüche, **dadurch gekennzeichnet, dass** die phosphatierte Materiallage (X) der Beschichtung (7) ein Schichtgewicht von mindestens 4 g/m² bis höchstens 100 g/m² aufweist.

5. Schienenrad nach einem der vorhergehenden Ansprüche, **dadurch gekennzeichnet, dass** die phosphatierte Materiallage (X) der Beschichtung (7) eine Schichtdicke von mindestens 5 µm bis höchstens 20 µm aufweist.

6. Schienenrad nach einem der vorhergehenden Ansprüche, **dadurch gekennzeichnet, dass** die phosphathaltige Materiallage (X) aus einem oder mehreren Metallphosphaten besteht, vorzugsweise aus Mangan-, Zink- und/oder Eisenphosphat.

7. Schienenrad nach einem der vorhergehenden Ansprüche, **dadurch gekennzeichnet, dass** die schmierstoffhaltige Materiallage (Y) ein aushärtender Gleitlack ist.

8. Schienenrad nach einem der vorhergehenden Ansprüche, **dadurch gekennzeichnet, dass** die schmierstoffhaltige Materiallage (Y) zumindest einen Trockenschmierstoff aufweist oder aus einem oder mehreren Trockenschmierstoffen besteht.

9. Schienenrad nach Anspruch 8, **dadurch gekennzeichnet, dass** der Trockenschmierstoff Molybdändisulfid MoS₂ ist.

10. Schienenrad nach einem der vorhergehenden Ansprüche, **dadurch gekennzeichnet, dass** die Materiallage (X), welche direkt auf der Kontaktfläche (B) der Reibscheibe (2) aufliegt, eine höhere mechanische Belastbarkeit und/oder eine höhere thermische Belastbarkeit aufweist, als die auf dieser Materiallage (X) angeordnete Materiallage (Y).

11. Verfahren zum Herstellen eines Schienenrades mit einer oder mehreren Reibscheiben mit folgenden Schritten:
A) Bereitstellen einer Reibscheibe (2) mit einer Kontaktfläche (B) zum Anlegen an eine Kontaktfläche (A) eines Radkörpers (1),
B) Phosphatieren zumindest der Kontaktfläche (B) der Reibscheibe (2) unter Ausbildung einer phosphathaltigen Materiallage (X)
C) Aufbringen einer schmierstoffhaltigen Materiallage (Y) auf die phosphathaltige Materiallage (X) und
D) Montage des Schienenrades,
**dadurch gekennzeichnet, dass** die Reibscheibe beim Montieren auf einen metallischen, unbeschichteten Radsteg (3) eines Radkörpers (1) festgelegt wird.

12. Verfahren nach Anspruch 11, **dadurch gekennzeichnet, dass** eine Radpfanne des Radkörpers (1) nach der Montage des Schienenrades mit einem Korrosionsschutzmittel geflutet wird.

## Claims

1. Rail wheel having a wheel body (1) and friction disks (2) fitted thereto on both sides by fastening elements, wherein a multi-layer coating (7) is arranged at least between a respective contact surface (B) of the friction disks (2) and a contact surface (A) of the wheel body (1), wherein a first material layer (X) is a phosphate-containing material layer (X), which is applied to the contact surface (B) of the friction disk (2), **characterized in that** the coating (7) has a lubricant-containing material layer (Y) on a surface of the phosphate-containing material layer (X) which faces toward the contact surface (A).

2. Rail wheel according to the preceding claim, **characterized in that** the temperature resistance of the coating (7) is at least 300°C.

3. Rail wheel according to one of the preceding claims, **characterized in that** the coefficient of the friction of the contact surfaces (A and B) of the friction disk (2) and of the wheel body (1) is at least 0.06 and at most 0.2.

4. Rail wheel according to one of the preceding claims, **characterized in that** the phosphated material layer (X) of the coating (7) has a layer weight of at least 4 g/m² to at most 100 g/m².

5. Rail wheel according to one of the preceding claims, **characterized in that** the phosphated material layer (X) of the coating (7) has a layer thickness of at least 5 µm to at most 20 µm.

6. Rail wheel according to one of the preceding claims, **characterized in that** the phosphate-containing material layer (X) consists of one or more metal phosphates, preferably of manganese phosphate, zinc phosphate and/or iron phosphate.

7. Rail wheel according to one of the preceding claims, **characterized in that** the lubricant-containing material layer (Y) is a curing lubricating varnish.

8. Rail wheel according to one of the preceding claims, **characterized in that** the lubricant-containing material layer (Y) comprises at least one dry lubricant or consists of one or more dry lubricants.

9. Rail wheel according to Claim 8, **characterized in that** the dry lubricant is molybdenum disulfide MoS₂.

10. Rail wheel according to one of the preceding claims, **characterized in that** the material layer (X), which lies directly on the contact surface (B) of the friction disk (2), has a higher mechanical load-bearing capacity and/or a higher thermal load-bearing capacity than the material layer (Y) arranged on said material layer (X).

11. Method for producing a rail wheel having one or more friction disks, comprising the following steps:
A) providing a friction disk (2) with a contact surface (B) for applying against a contact surface (A) of a wheel body (1),
B) phosphating at least the contact surface (B) of the friction disk (2) to form a phosphate-containing material layer (X),
C) applying a lubricant-containing material layer (Y) to the phosphate-containing material layer (X), and
D) assembling the rail wheel,
**characterized in that** the friction disk is fixed to a metallic, uncoated wheel web (3) of a wheel body (1) during assembly.

12. Method according to Claim 11, **characterized in that** a wheel tub of the wheel body (1) is flooded with an anticorrosive after the rail wheel has been assembled.

## Revendications

1. Roue ferroviaire ayant un voile (1) de roue et, de part et d'autre, des plateaux (2) de friction appliqués par des éléments de fixation, dans laquelle un revêtement (7) à plusieurs couches est mis au moins entre une surface (B) de contact des plateaux (2) de friction et une surface (A) de contact du voile (1) de la roue, une première couche (X) de matière étant une couche (X) de matière contenant du phosphate, qui est déposée sur la surface (B) de contact du plateau (2) de friction, **caractérisée en ce que** le revêtement (16) a, sur une surface tournée vers la surface (A) de contact de la couche (X) de matière contenant du phosphate, une couche (Y) de matière contenant du lubrifiant.

2. Roue ferroviaire suivant l'une des revendications précédentes, **caractérisée en ce que** la résistance à la température du revêtement (7) s'élève à au moins 300°C.

3. Roue ferroviaire suivant l'une des revendications précédentes, **caractérisée en ce que** le coefficient de frottement des surfaces (A et B) de contact du plateau (2) de friction et du voile (1) de la roue est d'au moins 0,06 et d'au plus 0,2.

4. Roue ferroviaire suivant l'une des revendications précédentes, **caractérisée en ce que** la couche (X) de matière phosphatée du revêtement (7) a un poids d'au moins 4 g/m² jusqu'à au plus 100 g/m².

5. Roue ferroviaire suivant l'une des revendications précédentes, **caractérisée en ce que** la couche (X) de matière phosphatée du revêtement (7) a une épaisseur d'au moins 5 µm à au plus de 20 µm.

6. Roue ferroviaire suivant l'une des revendications précédentes, **caractérisée en ce que** la couche (X) contenant du phosphate est constituée d'un ou de plusieurs phosphates métalliques, de préférence de phosphate de manganèse, de zinc et/ou de fer.

7. Roue ferroviaire suivant l'une des revendications précédentes, **caractérisée en ce que** la couche (Y) de matière contenant du lubrifiant est un vernis lubrifiant durcissant.

8. Roue ferroviaire suivant l'une des revendications précédentes, **caractérisée en ce que** la couche (Y) de matière contenant du lubrifiant a au moins un lubrifiant sec ou est constitué d'un ou de plusieurs lubrifiants secs.

9. Roue ferroviaire suivant la revendication 8, **caractérisée en ce que** le lubrifiant sec est du disulfure de molybdène MoS₂.

10. Roue ferroviaire suivant l'une des revendications précédentes, **caractérisée en ce que** la couche (X) de matière, qui s'applique directement à la couche (B) de contact du plateau (2) de friction, a une aptitude à supporter des charges mécaniques plus grande et/ou une aptitude à supporter des charges thermiques plus grande que la couche (Y) de matière disposée sur cette couche (X) de matière.

11. Procédé de fabrication d'une roue ferroviaire ayant un ou plusieurs plateaux de friction, comprenant les stades suivants :
A) on se procure un plateau (2) de friction ayant une surface (B) de contact à appliquer à une surface (A) de contact d'un voile (1) de roue,
B) on phosphate au moins la surface (B) de contact du plateau (2) de friction avec formation d'une couche (X) de matière contenant du phosphate,
C) on dépose une couche (Y) de matière contenant du lubrifiant sur la couche (X) de matière contenant du phosphate et
D) on monte la roue ferroviaire,
**caractérisé en ce qu'**on fixe le plateau de friction, lors du montage, sur une âme (3) métallique non revêtue d'un voile (1) de roue.

12. Procédé suivant la revendication 11, **caractérisé en ce qu'**on remplit d'un agent de protection vis-à-vis de la corrosion la cavité du voile (1) de la roue après le montage de la roue ferroviaire.
